# EUROPEAN PATENT SPECIFICATION

(11) **EP 1 197 883 B1**
(45) Date of publication and mention of the grant of the patent: **21.09.2011**
(21) Application number: 01308561.8
(22) Date of filing: 08.10.2001
(51) Int. Cl.: G06F 17/30, G11B 20/10, G11B 20/00, G11B 20/12

(54) **Information processing apparatus and method, and program storing medium**
Informationsverarbeitungsgerät und -verfahren, und Programspeichermedium
Appareil et méthode de traitement d'information, et support de stockage de programme

(30) Priority: 12.10.2000 JP 2000311800
(43) Date of publication of application: 17.04.2002
(73) Proprietor: Sony Corporation, Tokyo 141-0001 (JP)
(72) Inventor: Morita, Toshihiro, Shinagawa-ku, Tokyo 141-0001 (JP); Onda, Tomohiro, Shinagawa-ku, Tokyo 141-0001 (JP); Sakurai, Mikiko, Shinagawa-ku, Tokyo 141-0001 (JP)
(74) Representative: Robinson, Nigel Alexander Julian

(56) References cited:
- EP-A- 0 786 774
- EP-A- 0 851 423
- EP-A- 0 864 990
- EP-A2- 0 833 337
- DE-A1- 4 433 868
- US-A- 6 085 199
- KOESTLER G ET AL: "CLIENT-SERVE OPTIMIZATION FOR THE MULTIMEDIA DOCUMENT EXCHANGE" REPORT INSTITUT FUER INFORMATIK, XX, XX, September 1996 (1996-09), pages 1-21, XP002135139

## Description

The present invention relates to an information processing apparatus and method and a program storing medium and, more particularly, to an information processing apparatus and method for manipulating contents, and a program storing medium.

With the recent widespread use of digital technology, various types of data, such as music data and image data, have been increasingly digitally recorded in or reproduced from recording media.

Users, however, have been required to always pay attention to the format and the encoding system of data so as to manipulate the data according to the format and the encoding system when reproducing the data or transferring the data to another equipment.

One content of music or image basically corresponds to one file. Each time the file is changed into another format or encoding system to make it compatible with the desired equipment, it has been necessary to perform a cumbersome operation for converting the file.

The present invention has been made with a view toward solving the problem described above, and it is an object of the invention to obviate the need for paying attention to the format of a data content and to permit immediate use of the data content in a desired format.

EP-A-0 864 990 discloses an on-demand system for serving multimedia information in a format adapted to a requesting client.

To this end, according to one aspect of the present invention, there is provided a musical sound data processing apparatus comprising: storing means for storing a plurality of contents; a database having a first file ID identifying a first file for storing a content in a first format and a second file ID identifying a second file for storing said content in a second format and a third file ID identifying a third file for storing said content in said first format at a different bit rate from said first file, wherein said first file ID and second file ID and third file ID are associated with one song ID identifying said content; song list displaying means for displaying a song list in which said content is displayed as a single song; song ID specifying means for specifying one of a plurality of song IDs when one song is selected from said song list; selecting means for selecting one of said first file, said second file and said third file based on the first file ID, the second file ID and the third file ID acquired from said database when said specified song ID is associated with said first file ID, said second file ID and said third file ID according to compatibility of a destination device; and manipulating means for manipulating either said first file, said second file or said third file as selected by said selecting means.

According to another aspect of the present invention, there is provided a musical sound data processing method comprising the steps of: storing a plurality of contents; associating with one song ID identifying a content a first file ID identifying a first file for storing said content in a first format, a second file ID identifying a second file for storing said content in a second format and a third file ID identifying a third file for storing said content in said first format at a different bit rate from said first file, wherein said first file ID and second file ID and third file ID are associated with one song ID identifying said content; displaying a song list in which said content is displayed as a single song; specifying one of a plurality of song IDs when one song is selected from said song list; selecting one of said first file, said second file and said third file based on the first file ID, the second file ID and the third file ID when said specified song ID is associated with said first file ID, said second file ID and said third file ID according to compatibility of a destination device; and manipulating either said first file, said second file or said third file as selected.

According to still another aspect of the present invention, there is provided a program storing medium in which a computer-readable program has been stored, said program being operable to control a musical sound data processing method comprising the steps of: storing a plurality of contents; associating with one song ID identifying said content a first file ID identifying a first file for storing a content in a first format, a second file ID identifying a second file for storing said content in a second format and a third file ID identifying a third file for storing said content in said first format at a different bit rate from said first file, wherein said first file ID and second file ID and third file ID are associated with one song ID identifying said content; displaying a song list in which said content is displayed as a single song when stored in said first file format, said second file format and said third file format; specifying one of a plurality of song IDs when one song is selected from said song list; selecting one of either said first file, said second file and said third file based on the first file ID, the second file ID and the third file ID when said specified song ID is associated with said first file ID, said second file ID and said third file ID, according to compatibility of a destination device; and manipulating either said first file, said second file or said third file as selected.

Embodiments of the invention will now be described, by way of example only, with reference to the accompanying drawings in which:
Fig. 1 is a diagram showing an example embodiment of a content data management system in accordance with the present invention;
Fig. 2 is a block diagram for illustrating the configuration of a personal computer 1;
Fig. 3 is a block diagram illustrating the function of the personal computer 1;
Fig. 4 is a diagram illustrating an example of data recorded in a database 107;
Fig. 5 is a diagram illustrating the correspondence between songs and files;
Fig. 6 is a diagram showing an example of the information regarding a right;
Fig. 7 is a diagram illustrating the processing for coding a content, the processing for adding rights information associated with the content, and the processing for converting the encoding system of the content;
Fig. 8 is a diagram showing an example of the combination of file formats and encoding systems that can be used by a portable device 5-1;
Fig. 9 is a diagram showing an example of the combination of file formats and encoding systems that can be used by a portable device 5-2;
Fig. 10 is a diagram showing an example of a dialog box for setting a portable device 5 that is usually used;
Fig. 11 is a diagram showing an example of a window shown on a display 20 by a GUI 101;
Fig. 12 is a diagram showing another example of the window shown on the display 20 by the GUI 101;
Fig. 13 is a diagram showing an example of a dialog box in which instructions for optimization are to be entered;
Fig. 14 is a diagram showing an example of a dialog box displayed during optimization;
Fig. 15 is a diagram showing still another example of the window shown on the display 20 by the GUI 101;
Fig. 16 is a diagram showing an example of a dialog box in which instructions for optimization are to be entered;
Fig. 17 is a diagram showing a further example of the window shown on the display 20 by the GUI 101;
Fig. 18 is a diagram showing an example of a dialog box displaying the information regarding a file associated with a selected song;
Fig. 19 is a diagram illustrating a combination of a file format and a codec, and combinations of the formats compatible with a portable device 5 and codecs;
Fig. 20 is another diagram illustrating a combination of a file format and a codec, and a combination of a format compatible with a portable device 5 and a codec;
Fig. 21 is yet another diagram illustrating combinations of file formats and codecs, and a combination of a format compatible with a portable device 5 and a codec;
Fig. 22 is a flowchart illustrating the processing for selecting a file and reproduction;
Fig. 23 is a flowchart illustrating the processing for reproduction from a file;
Fig. 24 is a flowchart illustrating the processing for transferring a file; and
Fig. 25 is a flowchart illustrating the processing for converting a file.

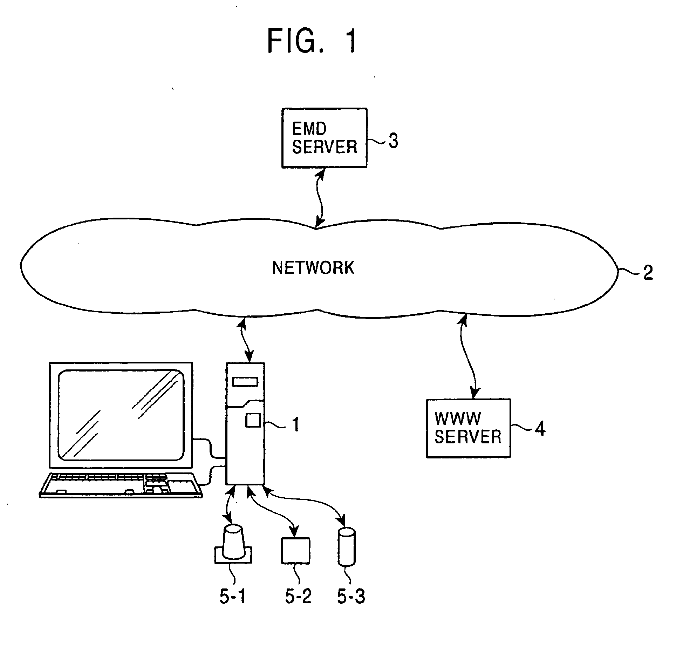

Fig. 1 shows an embodiment of a content data management system in accordance with the present invention. A personal computer 1 is connected to a network 2 constructed by a local area network or the Internet. The personal computer 1 records musical sound data (hereinafter referred to as "content") received from an electrical music distribution (EMD) server 3 or read from a compact disc (CD) as it is, or converts the content into a predetermined encoding format (e.g., ATRAC3 (trademark)) and enciphers it according to an enciphering system, such as the data encryption standard (DES), before recording data.

According to the content that has been recorded in the form of a plaintext or ciphertext, the personal computer 1 records the rights information indicating the conditions for using the content.

The rights information shows, for example, the number of portable devices (PDs) on which the content associated with the rights information may be simultaneously used (i.e., the number of PDs that can be "checked out", which will be discussed hereinafter). When the contents in the number indicated in the rights information are checked out, the personal computer 1 may reproduce the contents.

The rights information alternatively indicates the permission for copying. When contents have been copied into portable devices 5-1 to 5-3, the recorded contents can be reproduced by the personal computer 1. In some cases, the number of times the contents are allowed to be stored in the portable devices 5-1 to 5-3 is restricted. In such a case, there will be no increase of the number of copying times.

Furthermore, the rights information indicates that contents may be moved into another personal computer. Once the contents have been moved into the portable devices 5-1 to 5-3, the contents recorded in the personal computer 1 can no longer be used. In other words, the contents are deleted or the rights information is changed to disable the use of the contents.

The details of the rights information will be described hereinafter.

The personal computer 1 stores a content, which has been enciphered and recorded, in the portable device 5-1 connected thereto via a universal serial bus (USB) cable, together with data, such as a title or reproducing conditions, related to the content. As soon as the content is stored in the portable device 5-1, the personal computer 1 updates the rights information associated with the stored content. This will be hereinafter referred to as "checkout". To be more specific, each time a checkout is performed, the number of times the rights information associated with the content can be checked out (the number of times recorded in the personal computer 1) is decremented by one. If the allowed number of checkouts is zero, then the associated content cannot be checked out.

The personal computer 1 stores a content, which has been enciphered and recorded, in the portable device 5-2 connected thereto via a USB cable, together with data related to the content. As soon as the content is stored in the portable device 5-2, the personal computer 1 updates the rights information associated with the stored content. The personal computer 1 stores a content, which has been enciphered and recorded, in the portable device 5-3 connected thereto via a USB cable, together with data related to the content. As soon as the content is stored in the portable device 5-3, the personal computer 1 updates the rights information associated with the stored content.

Furthermore, the personal computer 1 causes the portable device 5-1 to delete (or disable the use of) the content that the personal computer 1 has checked out to the portable device 5-1 connected thereto via the USB cable, and updates the rights information associated with the deleted content. This will be hereinafter referred to as "checkin". To be more specific, each time a checkin is performed, the number of times the rights information regarding the associated content that can be checked out (the number of times recorded in the personal computer 1) is incremented by one.

The personal computer 1 causes the portable device 5-2 to delete (or disable the use of) the content that the personal computer 1 has checked out to the portable device 5-2 connected thereto via the USB cable, and updates the rights information associated with the deleted content. The personal computer 1 causes the portable device 5-3 to delete (or disable the use of) the content that the personal computer 1 has checked out to the portable device 5-3 connected thereto via the USB cable, and updates the rights information associated with the deleted content.

The personal computer 1 is not allowed to check in a content that has been checked out to the portable device 5-1 by another personal computer (not shown). Similarly, the personal computer 1 is not allowed to check in a content that has been checked out to the portable device 5-2 by another personal computer. Similarly, the personal computer 1 is not allowed to check in a content that has been checked out to the portable device 5-3 by another personal computer.

In response to a request from the personal computer 1, the EMD server 3 supplies a content to the personal computer 1 through the intermediary of the network 2, together with data associated with the content (e.g., the title or a restriction on playback).

The contents supplied by the EMD server 3 are encoded by a predetermined encoding system and enciphered by a predetermined enciphering system. The EMD server 3 supplies the keys for decoding the contents to the personal computer 1.

In response to a request from the personal computer 1, a World-Wide Web (WWW) server 4 supplies to the personal computer 1, through the intermediary of the network 2, the data associated with a CD from which a content has been read (e.g., the album name of the CD or the company marketing the CD) and the data associated with the content read from the CD (e.g., the title or the name of the composer).

The portable device 5-1 stores the content supplied from the personal computer 1 (the content or the like that has been checked out), together with the data related to the content (e.g., the title or a restriction on playback). The portable device 5-1 reproduces the stored content on the basis of the data related to the content, and outputs it to a headphone or the like (not shown).

For instance, if an attempt is made to perform playback exceeding a limited number of playbacks that has been stored as the data related to the content, then the portable device 5-1 cancels the playback of the associated content. Similarly, if an attempt is made to perform playback after a playback time limit defined as a playback limit stored as the data related to the content has reached, then the portable device 5-1 cancels the playback of the associated content.

A user may remove the portable device 5-1, which has stored a content, from the personal computer 1, carry the portable device 5-1, and cause the stored content to be reproduced, so that the user may listen to a piece of music or the like corresponding to the content through a headphone or other similar devices.

The portable device 5-2 stores the content supplied from the personal computer 1, together with the data related to the content. The portable device 5-2 reproduces the stored content on the basis of the data related to the content, and outputs it to a headphone or the like (not shown). A user may remove the portable device 5-2, which has stored the content, from the personal computer 1, carry the portable device 5-2, and cause the stored content to be reproduced, so that the user may listen to a piece of music or the like corresponding to the content through a headphone or other similar devices.

The portable device 5-3 stores the content supplied from the personal computer 1, together with the data related to the content. The portable device 5-3 reproduces the stored content on the basis of the data related to the content, and outputs it to a headphone or the like (not shown). A user may remove the portable device 5-3, which has stored the content, from the personal computer 1, carry the portable device 5-3, and cause the stored content to be reproduced, so that the user may listen to a piece of music or the like corresponding to the content through a headphone or other similar devices.

Hereinafter, the portable devices 5-1 to 5-3 will be referred to simply as "the portable device 5" unless it is necessary to discriminate them.

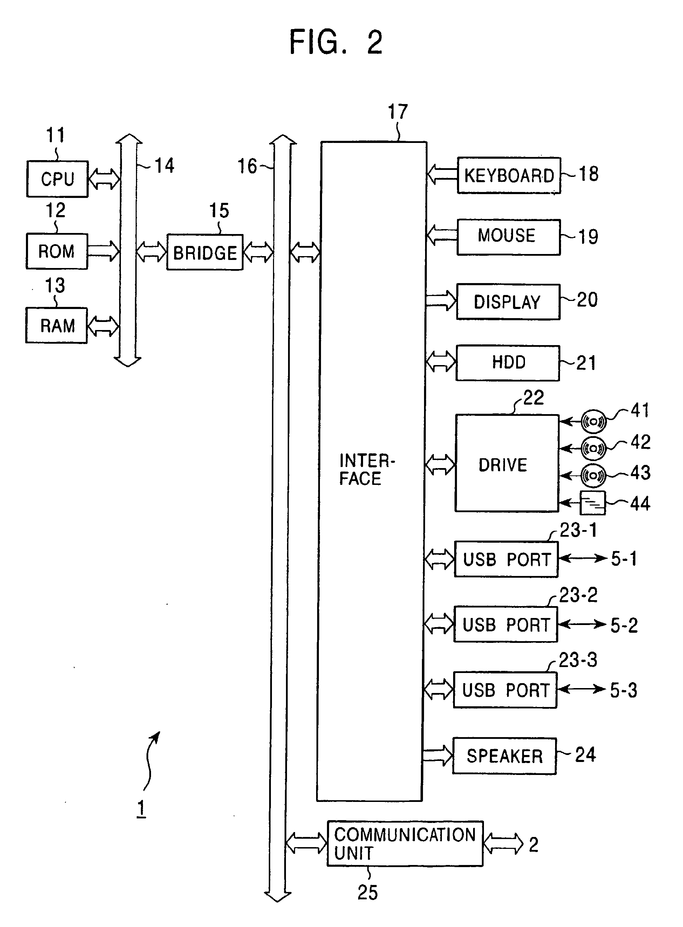

Fig. 2 illustrates the configuration of the personal computer 1. A central processing unit (CPU) 11 actually executes a variety of application programs for implementing the functions, which will be discussed hereinafter, and an operating system (OS). A read-only memory (ROM) 12 generally stores the programs used by the CPU 11 and basically fixed data among operation parameters. A random-access memory (RAM) 13 stores the programs used during execution by the CPU 11 and the parameters that change as necessary during the execution. These constituents are interconnected by a host bus 14 constructed by a CPU bus or the like.

The host bus 14 is connected to an external bus 16, such as a peripheral component interconnect/interface (PCI) bus, through the intermediary of a bridge 15.

A keyboard 18 is operated by a user to enter diverse commands in the CPU 11. A mouse 19 is operated by the user to specify or select a particular point on the screen of a display 20. The display 20 is formed of a liquid crystal display unit or a cathode ray tube (CRT) or the like to display a variety of types of information in terms of texts or images. A hard disk drive (HDD) 21 drives hard disks and causes them to record or reproduce information or the programs executed by the CPU 11.

A drive 22 reads the data or program that has been recorded in a magnetic disk 41, an optical disk 42 (including a CD), a magneto-optical disk 43, or a semiconductor memory 44, which has been mounted, and supplies the data or program to the RAM 13 connected thereto through the intermediary of an interface 17, the external bus 16, the bridge 15, and the host bus 14.

The portable device 5-1 is connected to a USB port 23-1 via a USB cable. The USB port 23-1 outputs the data (e.g., a content or a command of the portable device 5-1) supplied from the HDD 21, the CPU 11, or the RAM 13 to the portable device 5-1 through the intermediary of the interface 17, the external bus 16, the bridge 15, or the host bus 14.

The portable device 5-2 is connected to a USB port 23-2 via a USB cable. The USB port 23-2 outputs the data (e.g., a content or a command of the portable device 5-2) supplied from the HDD 21, the CPU 11, or the RAM 13 to the portable device 5-2 through the intermediary of the interface 17, the external bus 16, the bridge 15, or the host bus 14.

The portable device 5-3 is connected to a USB port 23-3 via a USB cable. The USB port 23-3 outputs the data (e.g., a content or a command of the portable device 5-3) supplied from the HDD 21, the CPU 11, or the RAM 13 to the portable device 5-3 through the intermediary of the interface 17, the external bus 16, the bridge 15, or the host bus 14.

A speaker 24 outputs a predetermined sound corresponding to a content on the basis of an audio signal supplied from the interface 17.

The keyboard 18 and the speaker 24 are connected to the interface 17. The interface 17 is connected to the CPU 11 through the intermediary of the external bus 16, the bridge 15, and the host bus 14.

A communication unit 25 has the network 2 connected thereto, stores the data (e.g., a content transmission request) supplied from the CPU 11 or the HDD 21 in a packet of a predetermined format, and transmits the packet via the network 2. The communication unit 25 also outputs, via the network 2, the data (e.g., a content) stored in a received packet to the CPU 11, the RAM 13, or the HDD 21.

The communication unit 25 is connected to the CPU 11 through the intermediary of the external bus 16, the bridge 15, and the host bus 14.

Hereinafter, the USB ports 23-1 through 23-3 will be referred to simply as "the USB port 23" unless it is necessary to discriminate them.

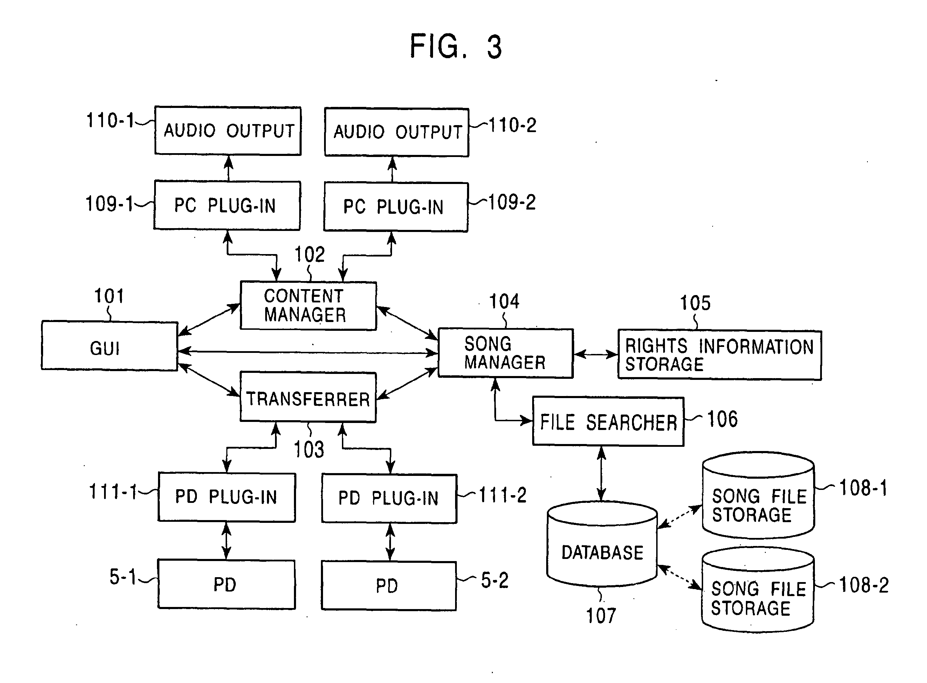

Fig. 3 is a block diagram illustrating the functions of the personal computer 1 that are implemented when the CPU 11 executes a content management program. In response to the operation of the keyboard 18 or the mouse 19 performed by a user, a graphical user interface (GUI) 101 mainly supplies the file name of the file wherein the song title corresponding to the content or the content desired by the user has been stored to a song manager 104, and requests the data corresponding to the content be registered in the database 107.

The GUI 101 acquires, through the song manager 104, the data corresponding to the content, such as the data regarding a song ID, a title, or an artist name, from the database 107, and causes the song ID, the title, or the artist name, etc. to be displayed on the display 20. When the playback of a content is requested by an operation performed by the user, the GUI 101 supplies the song ID associated with the content requested to be reproduced to a content manager 102, and requests the content manager 102 to play back the content.

Upon request for the transfer of a content (e.g., checkout, copying, or moving) made by an operation performed by the user, the GUI 101 supplies the song ID associated with the content requested to be transferred to a transferrer 103, and requests the transferrer 103 to transfer the content.

Upon request for the playback of a content from the GUI 101, the content manager 102 supplies the song ID associated with the content requested to be reproduced to the song manager 104, and also requests for the file name associated with the content. When the content manager 102 acquires the file name from the song manager 104, the content manager 102 acquires the content from a song file storage 108-1 or 108-2 through the intermediary of the song manager 104, a file searcher 106, and the database 107.

The content manager 102 supplies the acquired content to a protected content (PC) plug-in 109-1 or 109-2.

When a content is supplied from the content manager 102, and if the content has not been enciphered, then the PC plug-in 109-1 decodes the encoded content and supplies the audio data to an audio output 110-1. When a content is supplied from the content manager 102, and if the content has been enciphered, then the PC plug-in 109-1 decodes the enciphered content into a plaintext and also decodes an encoded content, and supplies the audio data to the audio output 110-1. Based on the audio data, the audio output 110-1 generates an audio signal to cause the speaker 24 to output a sound.

When a content is supplied from the content manager 102, and if the content has not been enciphered, then the PC plug-in 109-2 decodes the encoded content and supplies the audio data to an audio output 110-2. When a content is supplied from the content manager 102, and if the content has been enciphered, then the PC plug-in 109-2 decodes the enciphered content into a plaintext and also decodes an encoded content, and supplies the audio data to the audio output 110-2. Based on the audio data, the audio output 110-2 generates an audio signal to cause the speaker 24 to output a sound.

A user may additionally install the PC plug-ins to the personal computer 1.

The PC plug-in 109-1 and the PC plug-in 109-2 will be hereinafter referred to simply as "the PC plug-in 109" unless it is necessary to discriminate them.

When a request for the transfer of a content is received from the GUI 101, the transferrer 103 supplies the song ID associated with the content requested to be transferred to the song manager 104 and requests the file name associated with the content. When the transferrer 103 acquires the file name from the song manager 104, the transferrer 103 acquires the content associated with the file name from the song file storage 108-1 or 108-2 through the intermediary of the song manager 104, the file searcher 106, and the database 107.

The transferrer 103 supplies the acquired content to a PD plug-in 111-1 or 111-2.

The PD plug-in 111-1 performs two-way authentication with the portable device 5-1 when transferring a content to the portable device 5-1. If the two-way authentication fails, then the PD plug-in 111-1 does not transfer the content to the portable device 5-1.

When the PD plug-in 111-1 receives a content from the transferrer 103, if the content has been enciphered, then the PD plug-in 111-1 supplies the content together with the data related to the content to the portable device 5-1. When the PD plug-in 111-1 receives a content from the transferrer 103, if the content has not been enciphered, then the PD plug-in 111-1 enciphers the content, and supplies the enciphered content together with the data related to the content to the portable device 5-1.

The processing for the two-way authentication may alternatively be carried out when the portable device 5-1 is connected to the personal computer 1.

The PD plug-in 111-2 performs two-way authentication with the portable device 5-2 when transferring a content to the portable device 5-2. If the two-way authentication fails, then the PD plug-in 111-2 does not transfer the content to the portable device 5-2.

When the PD plug-in 111-2 receives a content from the transferrer 103, if the content has been enciphered, then the PD plug-in 111-2 supplies the content together with the data related to the content to the portable device 5-2. When the PD plug-in 111-2 receives a content from the transferrer 103, if the content has not been enciphered, then the PD plug-in 111-2 enciphers the content, and supplies the enciphered content together with the data related to the content to the portable device 5-2.

The processing for the two-way authentication may alternatively be carried out when the portable device 5-2 is connected to the personal computer 1.

A user may additionally install the PD plug-ins to the personal computer 1.

Hereinafter, the PD plug-in 111-1 and the PD plug-in 111-2 will be referred to simply as "the PD plug-in 111" unless it is necessary to discriminate them.

The song manager 104 causes a content stored in a file recorded in the HDD 21 or a content supplied from the content manager 102 to be stored in a file via the database 107, and recorded in the song file storage 108-1 or 108-2.

The song manager 104 causes data, such as a song name associated with the content and the file name associated with the content, to be recorded in the database 107, and also reads out a song name, a file name, etc. from the database 107. Upon receipt of a song name or a file name from the GUI 101, the song manager 104 causes a record to be added to the database 107 and a song name or a file name to be recorded as the item of the record.

In response to a request from the GUI 101, the song manager 104 reads out all song names and song IDs, etc., which have been recorded in the database 107, from the database 107 and supplies the read data to the GUI 101.

Upon receipt of a song ID from the content manager 102, the song manager 104 reads a file name associated with the song ID from the database 107, and supplies the read file name to the content manager 102. Upon receipt of a song ID from the transferrer 103, the song manager 104 reads a file name associated with the song ID from the database 107, and supplies the read file name to the transferrer 103.

In response to a request from the song manager 104, the file searcher 106 searches for the file associated with the file name (the file storing the content) from the song file storage 108-1 or 108-2 on the basis of the file name acquired from the database 107. The file searcher 106 supplies the file read from the song file storage 108-1 or 108-2 to the song manager 104, or renames the file before supplying the renamed file to the song manager 104.

The song manager 104 supplies the file, which has been supplied from the file searcher 106 and in which the content is stored, to the content manager 102 or the transferrer 103.

The database 107 records the data related to contents, such as song IDs, song names, file names, or other attributes. The database 107 is stored in the HDD 21.

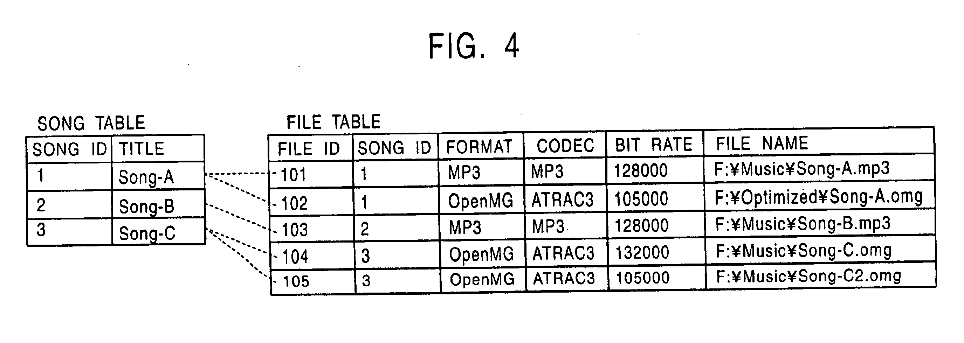

Fig. 4 shows an example of the data recorded by the database 107. The database 107 is, for example, a relational database, and manages data associated with contents by means of a song table and a file table.

For instance, the song table is constituted by a record composed of song ID items and song title items, one song title being stored in correspondence to one song ID. The song ID uniquely corresponds to a single song.

In the example shown in Fig. 4, in the song table, a song title Song-A has been recorded in correspondence to a song ID 1, a song title Song-B has been recorded in correspondence to a song ID 2, and a song title Song-C has been recorded in correspondence to a song ID 3.

For instance, the file table is formed by a record constructed by the items of file IDs, song IDs, formats, codecs, bit rates, and file names. A song ID, a format, a codec, a bit rate, a file name, etc. are stored for each file ID. There are some cases where two or more file IDs are associated with the same song ID.

A file ID uniquely corresponds to a single file. The format provides data indicating the format of a file. The codec provides data indicating the encoding system of the content stored in a file. The bit rate provides the data indicating the volume of data of a content per unit time (e.g., one second). The file name provides the data indicating a file name including a path that is constituted by, for example, a drive name and a folder name.

In the example shown in Fig. 4, the file table stores the song ID 1, the format MP3, the codec MP3, the bit rate 128000, and the file name F:¥Music¥SongA.mp3 in correspondence to the file ID 101, and also stores the song ID 1, the format OpenMG, the codec ATRAC3, the bit rate 105000, and the file name F:¥Optimized¥SongA.omg in correspondence to the file ID 102. Furthermore, in the example shown in Fig. 4, the file table stores the song ID 2, the format MP3, the codec MP3, the bit rate 128000, and the file name F:¥Music¥SongB.mp3 in correspondence to the file ID 103.

Furthermore, in the example shown in Fig. 4, the file table stores the song ID 3, the format OpenMG, the codec ATRAC3, the bit rate 132000, and the file name F:¥Music¥SongC.omg in correspondence to the file ID 104, and also stores the song ID 3, the format OpenMG, the codec ATRAC3, the bit rate 105000, and the file name F:¥Optimized¥SongC2.omg in correspondence to the file ID 105.

The song file storage 108-1 is formed of, for example, the HDD 21 or an external memory (not shown), such as a removable disk device, and stores contents in the form of files. The contents recorded in the song file storage 108-1 come in two types, one type including the information regarding a right, and the other type not including the information regarding a right. The song file storage 108-1 is capable of storing one or more files in correspondence to a single song. The song file storage 108-1 corresponds to, for example, a drive letter. The drive letter corresponding to the song file storage 108-1 may be changed.

The song file storage 108-2 is formed of, for example, the HDD 21 or an external memory (not shown), such as a removable disk device, and stores contents in the form of files. The contents recorded in the song file storage 108-2 come in two types, one type including the information regarding a right, and the other type not including the information regarding a right. The song file storage 108-2 is capable of storing one or more files in correspondence to a single song. The song file storage 108-2 corresponds to, for example, a drive letter. The drive letter corresponding to the song file storage 108-2 may be changed.

There are cases where one or more files corresponding to one song are recorded in the song file storage 108-1, and one or more files corresponding to that song are recorded in the song file storage 108-2.

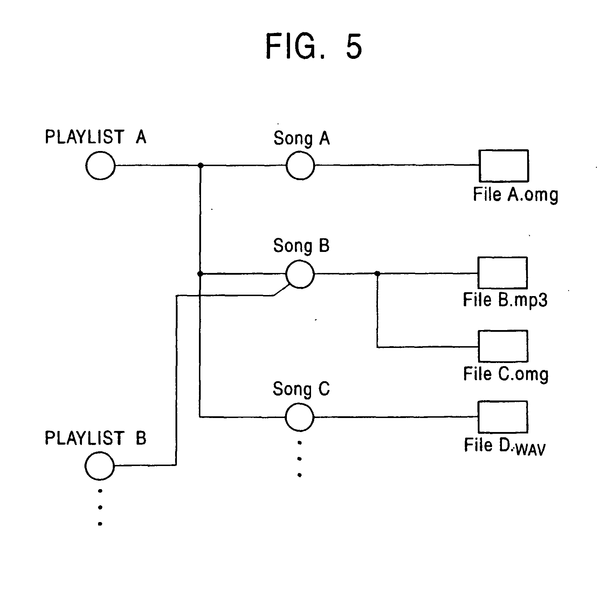

Fig. 5 illustrates the correspondence between songs and files. In the example shown in Fig. 5, a song SongA that belongs to a playlist A corresponds to FileA.omg, a song SongB that belongs to the playlist A and a playlist B corresponds to FileB.mp3 and FileC.omg, and a song SongC that belongs to the playlist A corresponds to FileD.wav. The playlist is the unit of song classification that is associated with 0 or 1 or more songs, and used mainly for indicating song titles.

With this arrangement, two or more files of different formats or encoding systems can be handled in one content.

A rights information storage 105 stores the rights information associated with a file that conforms to the standard provided by Secure Digital Music Initiative (SDMI) in, for example, the HDD 21 and manages it. Upon receipt of a song ID from the song manager 104, the rights information storage 105 searches for one piece of rights information associated with the song ID, and supplies the searched rights information to the song manager 104.

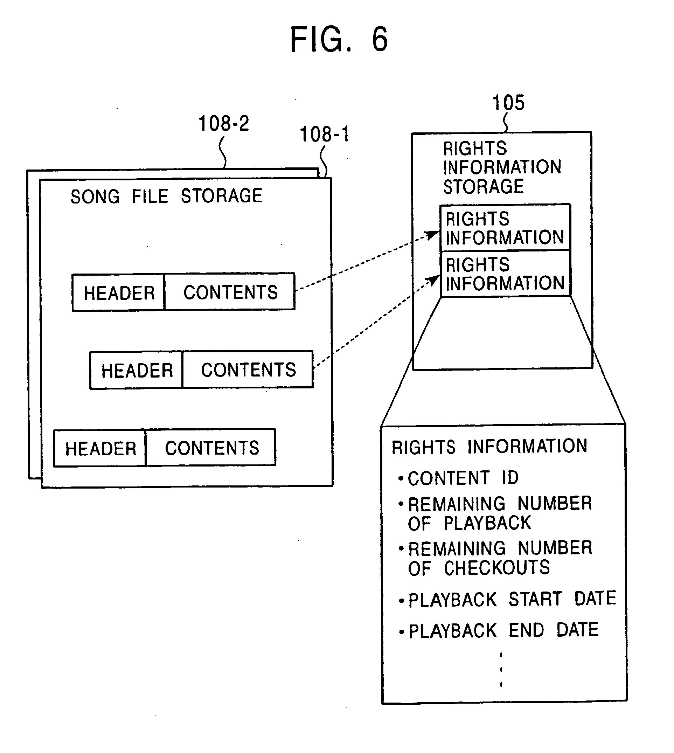

Fig. 6 illustrates an example of the rights information stored in the rights information storage 105. The rights information is primarily formed of, for example, a content ID, a remaining number of playbacks, a remaining number of checkouts, a playback start date, and a playback end date. The rights information stored in the rights information storage 105 is associated with one file stored in the song file storage 108-1 or 108-2.

The file stored in the song file storage 108-1 or 108-2 is constituted by, for example, a header and a content, which is musical sound data.

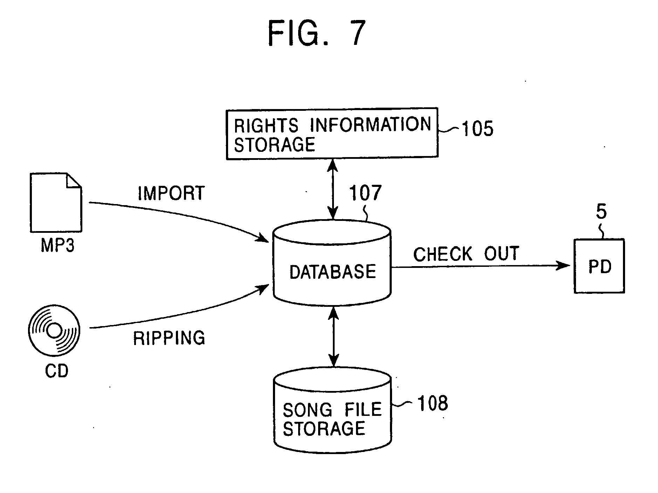

Referring now to Fig. 7, the descriptions will be given of the processing for enciphering a content, adding the rights information associated with the content, and converting the encoding system of the content.

For instance, when a content of an MP3 system is imported, i.e., registered in the database 107, if a first setting has been made (by operating the GUI 101), then no rights information is generated, and the data corresponding to the content is registered in the database 107.

The MP3-system content imported with no generated rights information is subjected to an inspection for checking whether the MP3-system content includes a watermark of a predetermined system, depending on an operation performed thereafter. If the watermark of the predetermined system is not included, then a content enciphered in the MP3 system is further generated and checked out, or a content in an ATRAC3 format is further generated and enciphered, and the enciphered content in the ATRAC3 format is stored in the song file storage 108.

For instance, when a content of the MP3 system is imported, if a second setting has been made, then it is checked whether the content of the MP3 system includes a watermark of a predetermined system. If the content does not include the watermark of the predetermined system, then the data associated with the content is registered in the database 107. Furthermore, the encoding system of the MP3-system content remains unchanged, and the rights information associated with the MP3-system content is generated, while the content remains in a plaintext. The generated rights information is stored in the rights information storage 105.

Regarding the imported MP3-system content with its rights information generated, a content enciphered in the MP3 system is further generated and checked out, or a content of the ATRAC3 format is further generated and enciphered, depending on an operation performed thereafter. The enciphered content in the ATRAC3 format is stored in the song file storage 108.

With this arrangement, a content data management system does not have to record an enciphered version and an unenciphered version of the same content, permitting effective use of a recording region, such as the HDD 21.

When a content of the MP3 system is imported, if a third setting has been made, then the inspection is performed to check whether the MP3-system content includes a watermark of a predetermined system, depending on an operation performed thereafter. If the watermark of the predetermined system is not included, then the data associated with the content is registered in the database 107. Furthermore, a content converted into the ATRAC3 format is generated, and the generated content is enciphered. The content that has been converted into the ATRAC3 format and enciphered is recorded in the song file storage 108. The rights information associated with the ATRAC3 format content is generated, and the generated rights information is stored in the rights information storage 105.

If a content includes a watermark of the predetermined system, then the content will not be registered, the encoding system thereof will not be changed, the content will not be enciphered, and the content will not be checked out.

When a content recorded in a CD is ripped, the read content is converted into the ATRAC3 format, and enciphered. The content that has been converted into the ATRAC3 format and enciphered is recorded in the song file storage 108. The rights information associated with the ATRAC3 format content is generated, and the generated rights information is stored in the rights information storage 105.

The importing, the predetermined processing after the importing, or ripping is carried out on one content or two or more contents.

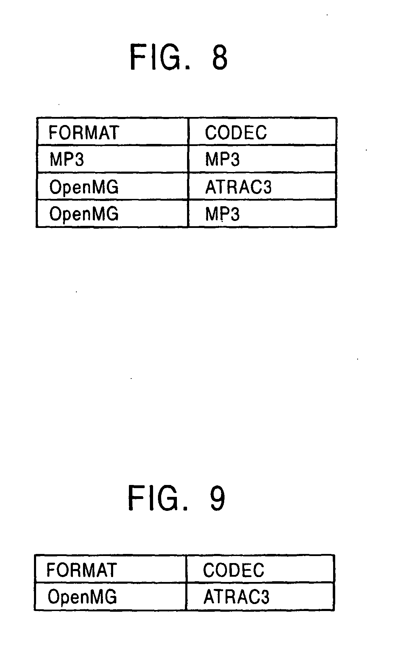

Fig. 8 exemplifies the combinations of file formats and encoding systems that are stored in the PD plug-in 111-1 and compatible with the portable device 5-1.

In the example of data shown in Fig. 8, the portable device 5-1 is compatible with a file having a format of MP3 and an encoding system of MP3, a file having a format of OpenMG and an encoding system of ATRAC3, and a file having a format of OpenMG and an encoding system of MP3.

Fig. 9 exemplifies the combinations of file formats and encoding systems that are stored in the PD plug-in 111-2 and compatible with the portable device 5-2.

In the example of data shown in Fig. 9, the portable device 5-2 is compatible with a file having a format of OpenMG and an encoding system of ATRAC3, but incompatible with a file having a format of MP3 and an encoding system of MP3, and a file having a format of OpenMG and an encoding system of MP3.

The descriptions will now be given of specific file formats and the creation of a file in which the encoding system thereof have been changed.

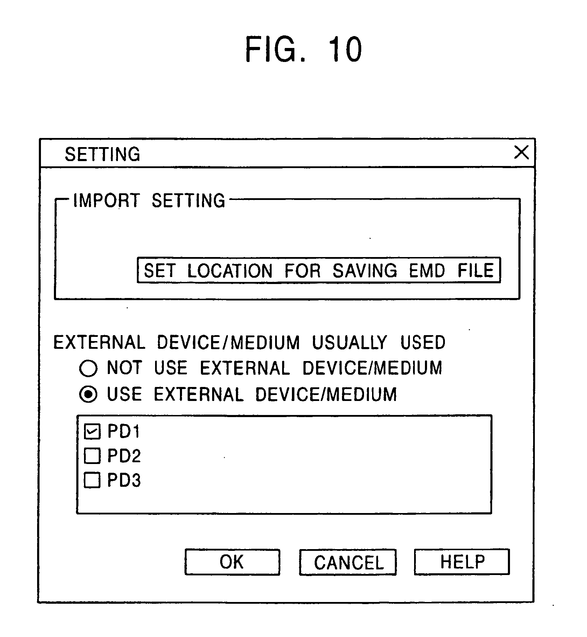

Fig. 10 exemplifies a dialog box that the GUI 101 causes the display 20 to display. The dialog box is used to set the portable device 5 usually used.

In the example shown in Fig. 10, the portable device 5 is used, and PD1 (e.g., the portable device 5-1) is set as the portable device 5 usually used. When the button "OK" shown in Fig. 10 is clicked, the GUI 101 supplies the data indicating that PD1 is defined as the portable device 5 to be usually used to the song manager 104.

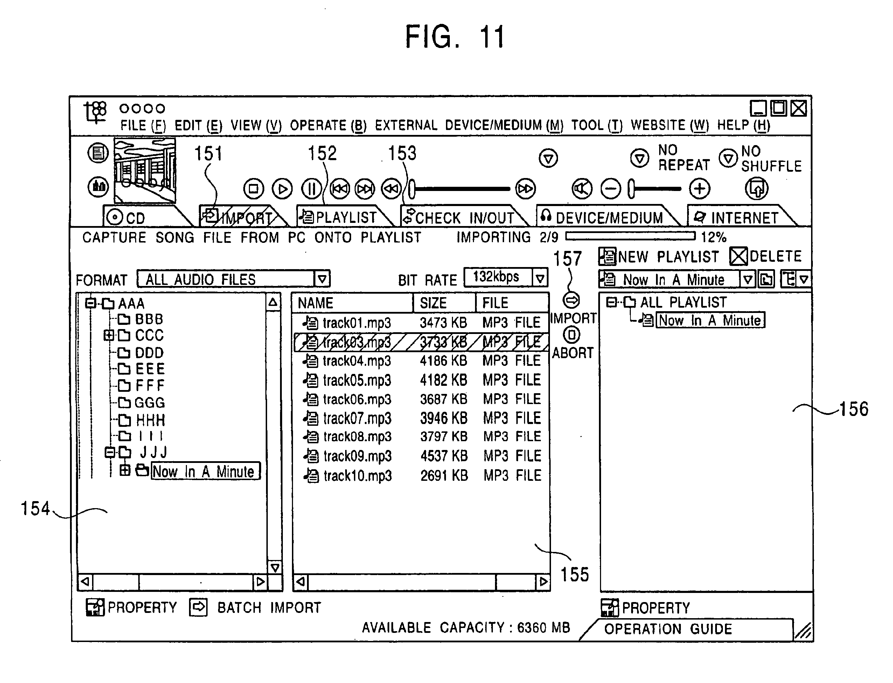

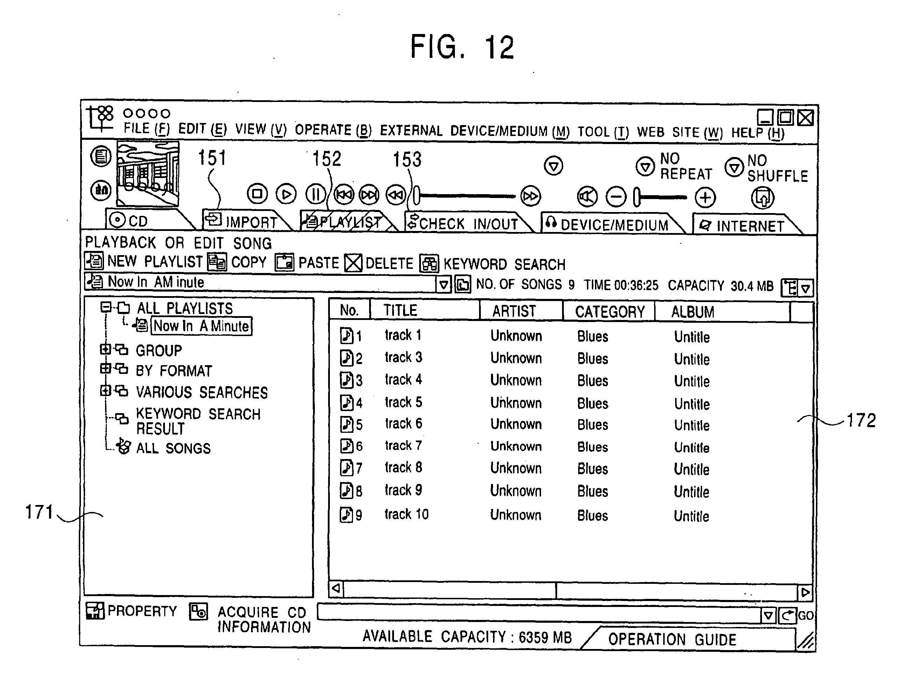

Fig. 11 and Fig. 12 exemplify windows that the GUI 101 causes the display 20 to show when the data associated with a content is registered in the database 107 with no generated rights information.

Referring to Fig. 11, the window displayed on the display 20 by the GUI 101 includes a tab 151 named "IMPORT", a tab 152 named "PLAYLIST", and a tab 153 named "CHECK IN/OUT", etc.

When the tab 151 named "IMPORT" is in an active state, the GUI 101 causes the display 20 to show a field 154 for displaying the icons associated with the folders, which have been recorded in the HDD 21, in a tree structure, a field 155 for mainly showing the icons associated with the files stored in a selected folder or file sizes, a field 156 for selecting a playlist to which a content to be imported belongs, and a button 157 for importing.

When a file displayed in the field 155 is selected and the button 157 for importing is clicked, the GUI 101 supplies the data indicating the selected file and the instruction for implementing the import to the song manager 104.

If a setting has been made on the screen shown in Fig. 10 so that the portable device 5 or the like will not be used, then the song manager 104 causes the data associated with a file to be registered in the database 107 without generating the rights information associated with the file specified to be imported.

Fig. 12 exemplifies a window that the GUI 101 causes the display 20 to show when the tab 152 named "PLAYLIST" is clicked. When the tab 152 named "PLAYLIST" is clicked, the GUI 101 causes the display 20 to primarily show a field 171 for selecting a playlist and a field 172 for displaying an icon associated with an imported content, etc.

In the example shown in Fig. 12, the GUI 101 displays, in the field 172, the icon associated with a content whose data associated with a file has been registered in the database 107 but has no rights information.

In the exemplified window shown in Fig. 12, the data associated with the file has been registered in the database 107. If a content having no rights information is selected and optimization is instructed, then the song manager 104 generates rights information associated with the selected content, and causes the generated rights information to be recorded in the rights information storage 105.

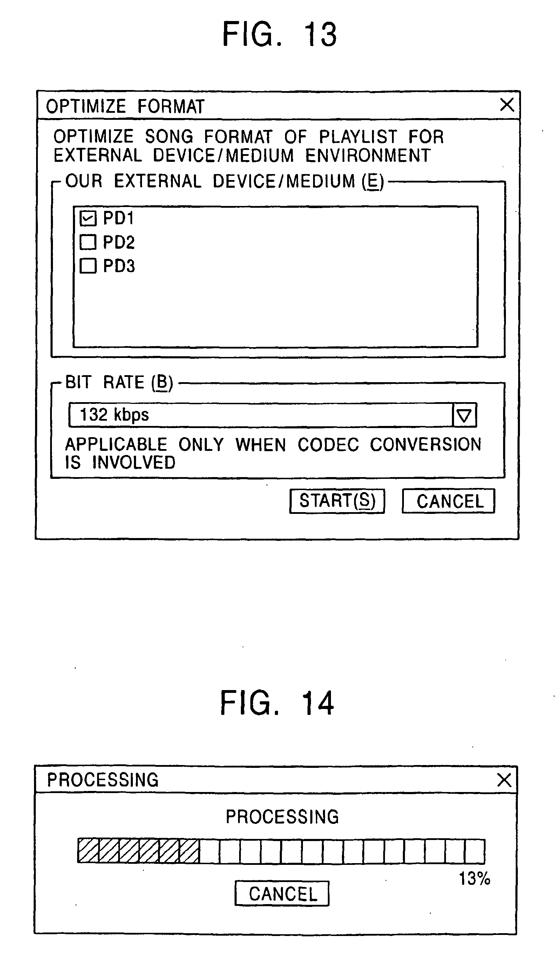

If optimization is specified, and the setting has been made so that no portable device 5 or the like will be used, then the GUI 101 causes the dialog box shown in, for example, Fig. 13, to be displayed.

In the exemplified dialog box shown in Fig. 13, PD1 has been set as the portable device 5 to be used, and the encoding bit rate has been set to 132 kbps. When the button named "START" in Fig. 13 is clicked, the CUI 101 uses PD1 and supplies the data indicating that the encoding bit rate will be 132 kbps to the song manager 104.

If it is necessary to convert the encoding system of a content due to a setting in the dialog box shown in Fig. 10 or a setting in the dialog box shown in Fig. 13, the song manager 104 instructs the transferrer 103 to generate a content with a changed encoding system. Based on the instruction from the song manager 104, the transferrer 103 causes the PC plug-in 109-1 or 109-2 to generate the content with the changed encoding system.

While the PC plug-in 109-1 or 109-2 is generating the content with the changed encoding system in response to the instruction from the transferrer 103, the GUI 101 causes the dialog box shown in, for example, Fig. 14 to be displayed on the display 20. The generated content with the changed encoding system is stored in the song file storage 108-1 or 108-2.

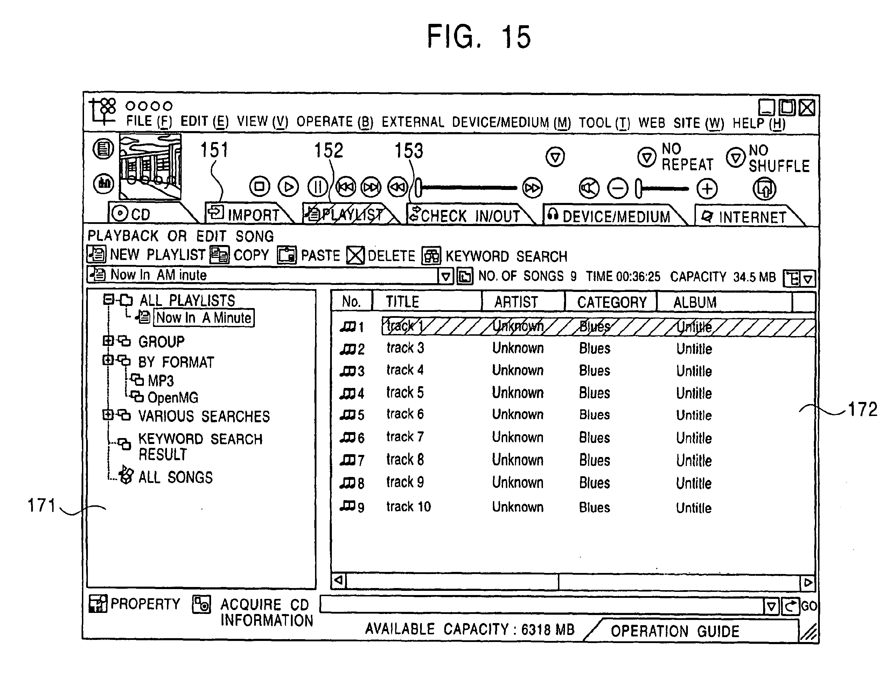

When the tab 152 named "PLAYLIST" is clicked, and the information related to the content for which rights information has been generated is displayed, the GUI 101 causes the icon (e.g., a musical note icon indicating the number of checkouts) to be displayed in the field 172, the icon being related to the content for which the rights information has been generated, as shown in Fig. 15.

When two or more files are recorded for one song, and if the numbers of allowable checkouts of the files are different, then the GUI 101 causes the smallest number of checkouts associated with the song to be displayed.

Furthermore, the GUI 101 is also able to, for example, cause the information regarding a file or files in a particular format to be displayed in the field 172 when an icon in the field 171 is clicked. In this state, if a request for deletion is issued, the GUI 101 issues the request for deleting a file in a particular format to the song manager 104. In response to the request from the GUI 101, the song manager 104 causes the song file storage 108-1 or 108-2 to delete the file in the particular format.

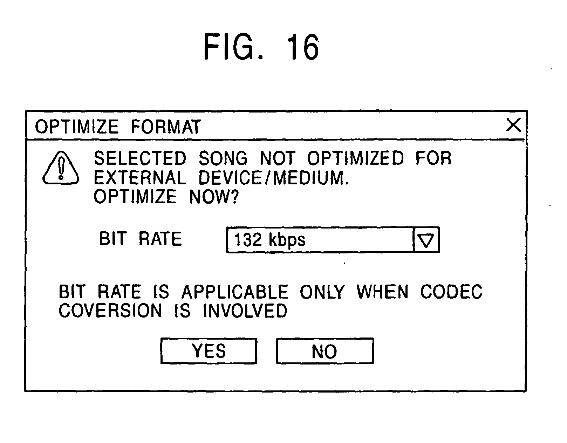

If an attempt is made to check out or move a content whose rights information has not been generated or a content of an encoding system that is incompatible with the portable device 5 to which the content is to be checked out or moved, then the GUI 101 causes the display 20 to show a dialog box for confirming that the rights information is generated or a file of a different encoding system is generated in addition to the creation of the rights information, as exemplified in Fig. 16.

When the button indicated "YES" in the dialog box shown in Fig. 16 is clicked, the song manager 104 generates the rights information associated with the content to be checked out or moved, or if a file of a different encoding system is to be generated, then the song manager 104 instructs the content manager 102 to generate a content of a different encoding system.

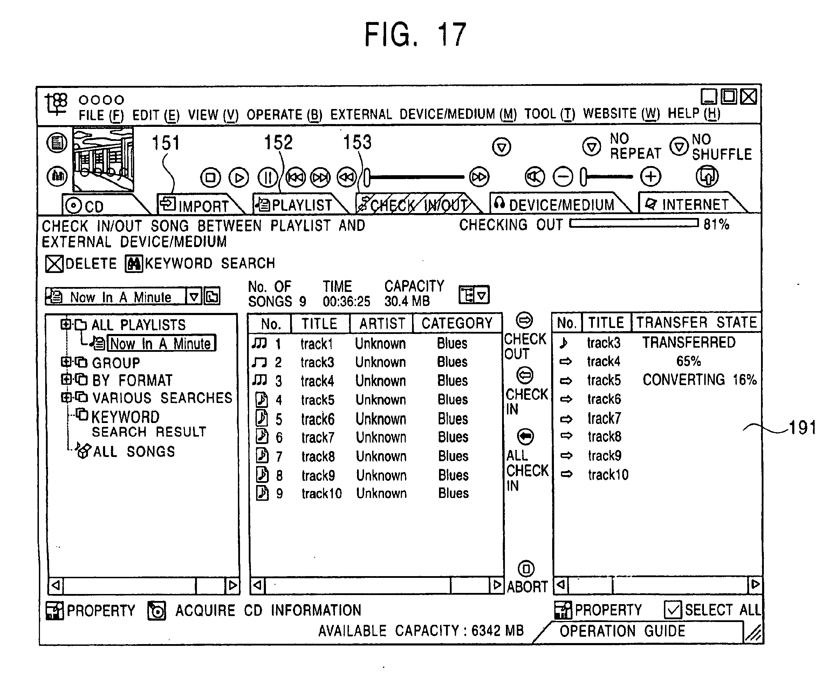

When the file of a different encoding system is generated and the content is transferred to the portable device 5, the GUI 101 causes a field 191 to display the information regarding the progress in the generation of the file of a different encoding system and the progress in the transfer, as exemplified in Fig. 17.

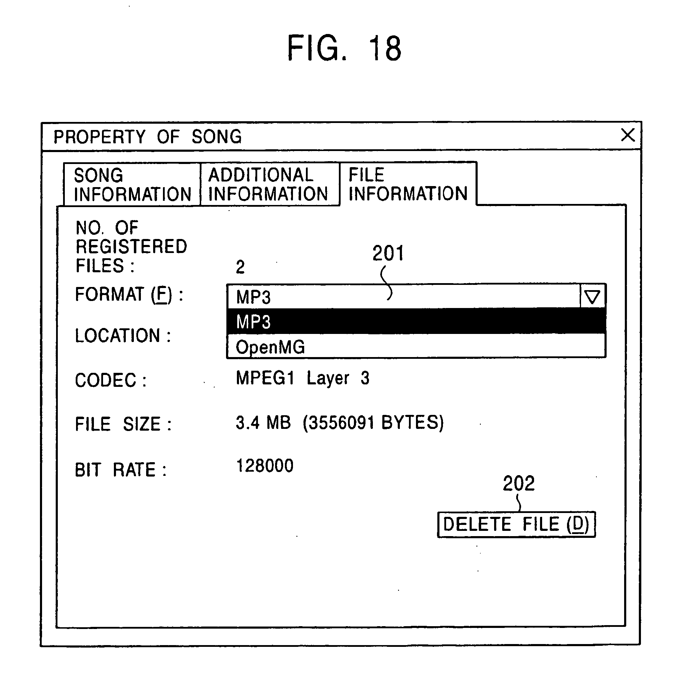

Furthermore, for instance, if an instruction is issued for selecting a song displayed in the field 172 shown in Fig. 15 and displaying the properties of the song, then the GUI 101 displays a dialog box for showing the information regarding the file associated with the selected song, as exemplified in Fig. 18. The dialog box exemplified in Fig. 18 displays data, such as the number of files associated with the song and the format, encoding system, size, or bit rate of one or more files associated with the song. When an action is taken in the field 201 to select a desired file, and a button 202 indicated "DELETE FILE" is clicked, the GUI 101 transmits an instruction to the song manager 104 to delete the record associated with the file, which has been selected by the operation performed in the field 201, from the file table stored in the database 107. In response to the instruction for deleting the record from the file table, the song manager 104 causes the database 107 to delete the record from the file table. At this time, the file itself remains undeleted.

When a desired file is selected by an operation performed in the field 201 and the button 202 indicated "DELETE FILE" is clicked, the GUI 101 may cause the song manager 104 to delete the selected file if two or more files are associated with a song, or prevent the song manager 104 from deleting the file if only one file is associated with the song.

Thus, the content data management system is able to cancel the registration of an imported file.

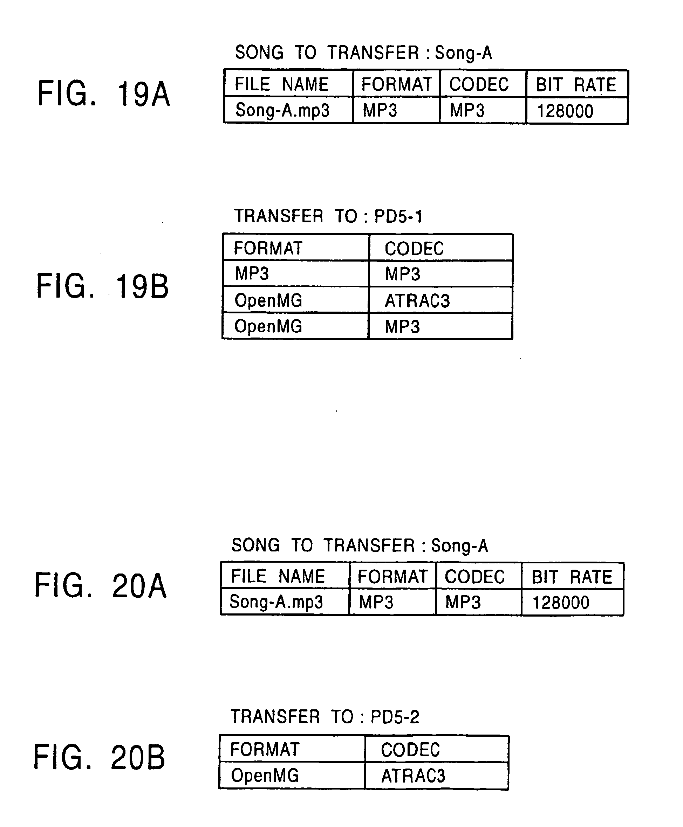

Referring now to Fig. 19 through Fig. 21, the processing for transferring a content to the portable device 5 will be described.

Fig. 19A shows a file that is in a plaintext and the MP3 format and has been encoded by MP3. To transfer this file to the portable device 5-1 compatible with files of the MP3 format and the MP3 encoding system, files of the OpenMG format and the ATRAC3 encoding system, and files of the OpenMG format and the MP3 encoding system, as shown in Fig. 19B, the transferrer 103 transfers the file to the PD plug-in 111-1 while having the PD plug-in 111-1 encipher the file.

However, if there is no rights information associated with the file to be transferred, then the song manager 104 determines whether the file includes a predetermined watermark. If it is determined that the predetermined watermark is not included, then the song manager 104 generates rights information and stores the generated rights information in the rights information storage 105 before instructing the transferrer 103 to implement the transfer. If it is determined that the predetermined watermark is included, then the song manager 104 aborts the transfer processing.

When the file that is in the MP3 format and has been encoded by MP3 as shown in Fig. 20A is transferred to the portable device 5-2 compatible only with files of the OpenMG format and the ATRAC3 encoding system, the content manager 102 causes the PC plug-in 109 to create, from the file, a file of the OpenMG format and the ATRAC3 encoding system. The generated file is enciphered and stored in the song file storage 108-1 or 108-2. The song manager 104 creates the rights information for the generated file and stores it in the rights information storage 105. The song manager 104 further adds a record associated with the generated file to the file table of the database 107. The transferrer 103 causes a file stored in the song file storage 108-1 or 108-2 to be transferred to the PD plug-in 111-2.

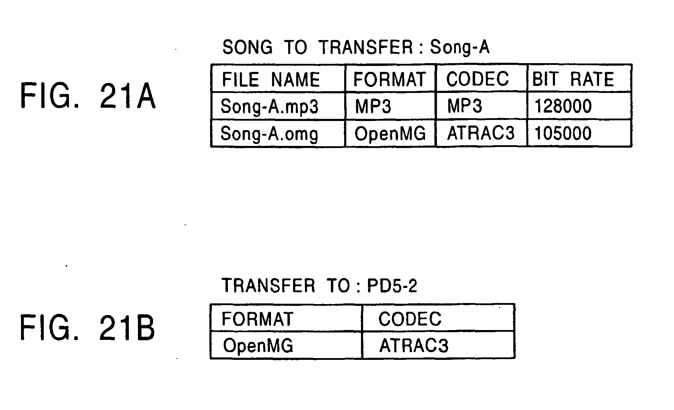

As shown in Fig. 21A, there are two files associated with a song to be transferred, namely, an MP3-format, MP3-encoded file and an OpenMG-formatted, ATRAC3-encoded file. To transfer the song to the portable device 5-2 compatible only with an OpenMG-formatted, ATRAC3-encoded files, as shown in Fig. 21B, the transferrrer 103 selects an OpenMG-formatted, ATRAC3-encoded file and transfers the file to the PD plug-in 111-2.

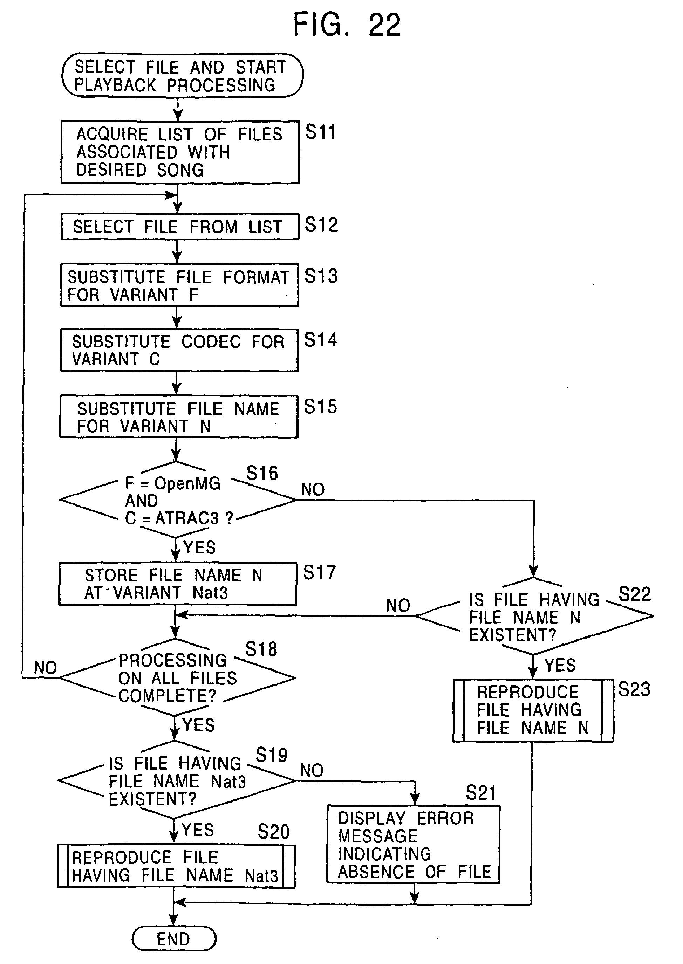

Referring now to the flowchart of Fig. 22, the processing for file selection and playback carried out by the content manager 102 will be described. In step S11, on the basis of the song ID supplied from the GUI 101, the content manager 102 acquires a list of files associated with a desired song from a song table and a file table of the database 107 through the intermediary of the song manager 104. The list of files primarily includes file IDs, formats, codecs (encoding systems), and file names.

In step S12, the content manager 102 selects one file from the acquired list of files. In step S13, the content manager 102 substitutes the format of the file for variant F. In step S14, the content manager 102 substitutes the codec (encoding system) for variant C. In step S15, the content manager 102 substitutes the file name for variant N.

In step S16, the content manager 102 determines whether the format of the file is OpenMG and the encoding system thereof is ATRAC3. If it is determined that the format of the file is OpenMG and the encoding system thereof is ATRAC3, then the content manager 102 proceeds to step S17 to substitute the file name stored in variant N for variant Nat3.

In step S18, the content manager 102 determines whether the processing on all files in the list has been completed. If it is determined that the processing on all files in the list has not been completed, then the content manager 102 returns to step S12 to repeat the processing for selecting a file.

If it is determined in step S18 that the processing on all files of the list has been completed, then the content manager 102 proceeds to step S19 to determine whether a file having the file name stored at variant Nat3 exists (whether the file has been recorded in the song file storage 108-1 or 108-2). If it is determined that the file having a file name stored at variant Nat3 exists, then the content manager 102 proceeds to step S20 to acquire the file having the file name stored at variant Nat3 from the song file storage 108-1 or 108-2, and cause the PC plug-in 109-1 or 109-2 to reproduce the acquired file. This completes the processing.

If it is determined in step S19 that the file having a file name stored at variant Nat3 does not exist, then the content manager 102 proceeds to step S21 to cause the GUI 101 to display an error message indicating that no such file has been found. This completes the processing.

In step S16, if it is determined that the format of the file is not OpenMG or the encoding system thereof is not ATRAC3, then the content manager 102 proceeds to step S22 to determine whether the file having the file name stored at variant N exists (whether the file has been recorded in the song file storage 108-1 or 108-2). If it is determined that no file having the file name stored at variant N exists, then the procedure proceeds to step S18 wherein it is determined whether the processing on all files has been completed.

In step S22, if it is determined that the file having the file name stored at variant N exists, then the content manager 102 proceeds to step S23 wherein the content manager 102 acquires the file having the file name stored at variant N from the song file storage 108-1 or 108-2, and causes the acquired file to be reproduced by the PC plug-in 109-1 or 109-2. This completes the processing.

Thus, the content manager 102 is able to select and reproduce a file better suited (e.g., requiring a fewer times of encoding conversions) for the playback of a desired song.

The content manager 102 may preferentially reproduce files having higher bit rates, or prioritize encoding systems so as to select and reproduce files according to the priority order.

With such an arrangement, when, for example, the file associated with a song requested to be played back has been recorded in a removable recording medium, such as a removable disk, and another associated file has been recorded in the HDD 21, and if the recording medium has not been mounted on the personal computer 1, then the content manager 102 will be able to automatically select the file recorded in the HDD 21 and reproduce the file.

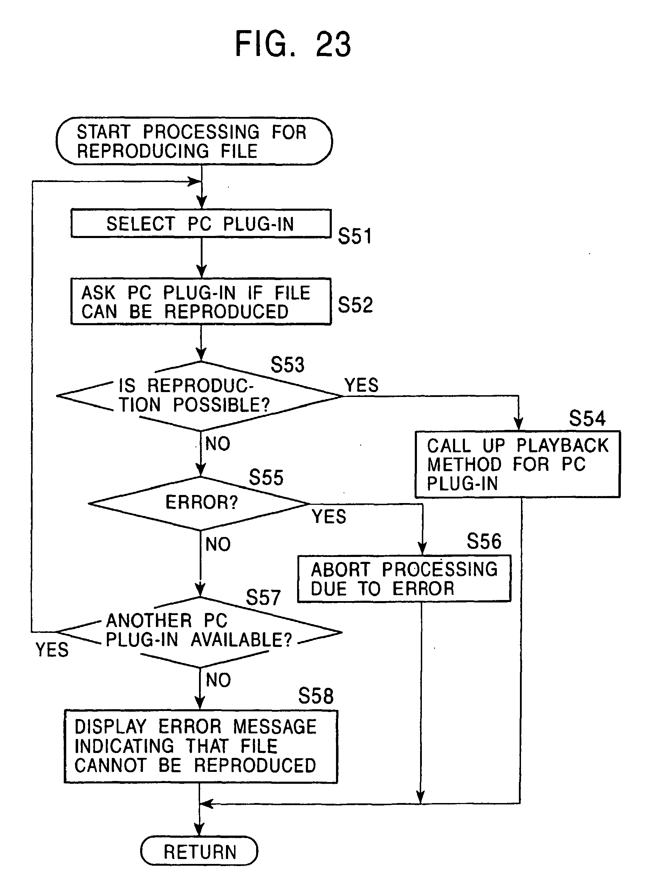

Referring now to the flowchart of Fig. 23, the processing for reproducing the file that corresponds to step S23 or S20 of Fig. 22 will be described in detail.

In step S51, the content manager 102 selects the PC plug-in 109. In step S52, the content manager 102 inquires of the PC plug-in 109 whether it is possible to reproduce the file desired to be played back. In step S53, content manager 102 determines whether the file can be reproduced on the basis of the response from the PC plug-in 109. If it is determined that the file can be reproduced, then the content manager 102 proceeds to step S54 to call up a playback method for the PC plug-in 109 and reproduce the content stored in the file. This completes the processing.

In step S53, if it is determined that the file cannot be reproduced, then the content manager 102 proceeds to step S55 to determine whether an error has occurred. If it is determined that an error has occurred, then the content manager 102 proceeds to step S56 to abort the processing because of the error, and terminates the processing.

In step S55, if it is determined that no error has occurred, then the content manager 102 proceeds to step S57 to determine whether another PC plug-in 109 is available. If it is determined that another PC plug-in 109 is available, then the content manager 102 returns to step S51 to repeat the processing from the selection of the PC plug-in 109 to the reproduction.

In step S57, if it is determined that no additional PC plug-in 109 is available, then the content manager 102 proceeds to step S58 to cause the GUI 101 to display an error message indicating that the file cannot be reproduced because there is no PC plug-in 109 capable of reproducing the file. This completes the processing.

Thus, the content manager 102 is capable of selecting the PC plug-in 109 suited for reproducing a file, and of reproducing the file.

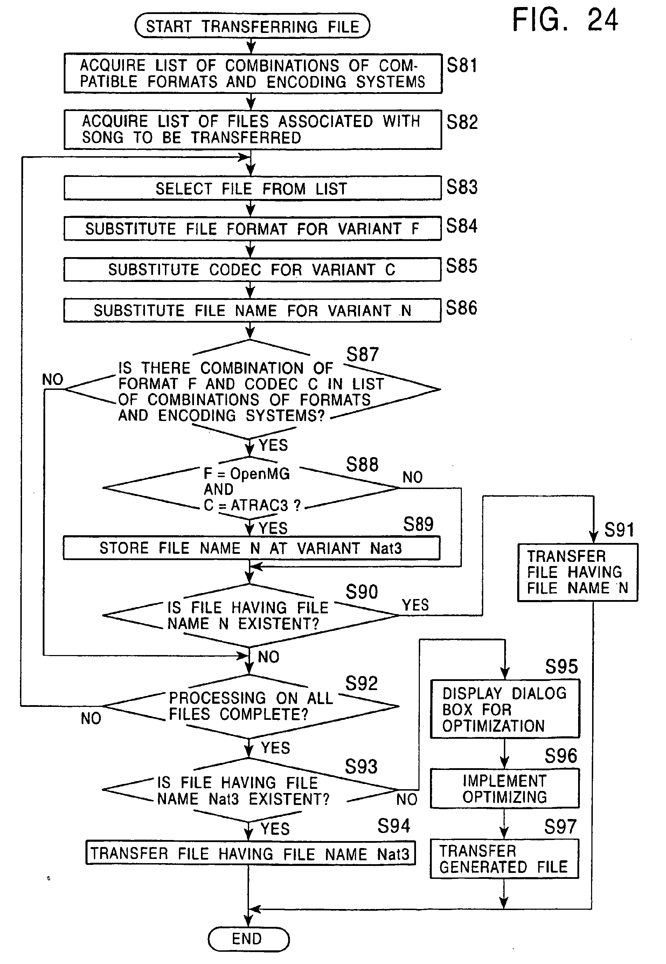

Referring now to the flowchart of Fig. 24, the processing for checking out, moving, or copying, i.e., the processing at the time of transferring a file carried out by the transferrer 103, will be described. In step S81, the transferrer 103 acquires, from the PD plug-in 111, a list of combinations of file formats and encoding systems that are compatible with a target device, such as the portable device 5. In step S82, the transferrer 103 acquires the list of files associated with a desired song from the song table and the file table of the database 107 through the intermediary of the song manager 104.

In step S83, the transferrer 103 selects one file from the acquired list of files. In step S84, the transferrer 103 substitutes the format of the file for variant F. In step S85, the transferrer 103 substitutes a codec (encoding system) for variant C. In step S86, the transferrer 103 substitutes a file name for variant N.

In step S87, the transferrer 103 determines whether a combination of a format corresponding to variant F and a codec corresponding to variant C is found in the list of combinations of file formats and encoding systems that are compatible with the portable device 5. If it is determined that the combination of the format corresponding to variant F and the codec corresponding to variant C exists in the list of combinations of the file formats and encoding systems that are compatible with the portable device 5, then the transferrer 103 proceeds to step S88.

In step S88, the transferrer 103 determines whether the format of the file is OpenMG and the encoding system thereof is ATRAC3. If it is determined that the format of the file is OpenMG and the encoding system thereof is ATRAC3, then the transferrer 103 proceeds to step S89 wherein it substitutes the file name stored at variant N for variant Nat3. The procedure proceeds to step S90.

In step S88, if it is determined that the file format is not OpenMG or the encoding system is not ATRAC3, then the procedure proceeds to step S90, skipping the processing of step S89.

In step S90, the transferrer 103 determines whether the file having the file name stored at variant N exists (i.e., whether the file has been recorded in the song file storage 108-1 or 108-2). If it is determined that the file having the file name stored at variant N exists, then the transferrer 103 proceeds to step S91 to acquire the file having the file name stored at variant N from the song file storage 108-1 or 108-2, and transfer the acquired file to the PD plug-in 111. This completes the processing.

In step S90, if it is determined that the file having the file name stored at variant N does not exist, then the procedure proceeds to step S92.

In step S87, if it is determined that no combination of a format corresponding to variant F and a codec corresponding to variant C is found in the list of combinations of file formats and encoding systems that are compatible with the portable device 5, then the procedure proceeds to step S92, skipping the processing from step S88 through step S90.

In step S92, the transferrer 103 determines whether the processing on all files of the list has been completed, and if the determination result is negative, then the transferrer 103 returns to step S83 to repeat the processing for selecting a file.

In step S92, if it is determined that the processing on all files of the list has been completed, then the transferrer 103 proceeds to step S93 to determine whether the file having the file name stored at variant Nat3 exists (whether the file has been recorded in the song file storage 108-1 or 108-2). If the determination result is affirmative, then the transferrer 103 proceeds to step S94 wherein the transferrer 103 acquires the file having the file name stored at variant Nat3 from the song file storage 108-1 or 108-2, and transfers the acquired file to the PD plug-in 111. This completes the processing.

In step S93, if it is determined that no file having the file name stored at variant Nat3 exists, then the transferrer 103 proceeds to step S95 wherein the transferrer 103 causes the GUI 101 to display the dialog box for optimization.

When the GUI 101 is operated to carry out optimization, the transferrer 103 proceeds to step S96 to carry out the processing for optimization on the basis of a file included in the list of files. In step S97, the transferrer 103 causes the file that has been generated by the processing for optimization to be transferred to the PD plug-in 111. This completes the processing.

In step S95, if the GUI 101 is operated not to carry out optimization, then the processing is terminated without carrying out the optimization.

Thus, the transferrer 103 is capable of selecting a file associated with the PD plug-in 111 and transferring the file to the PD plug-in 111. If there is no file associated with the PD plug-in 111, then the transferrer 103 carries out the processing for optimization.

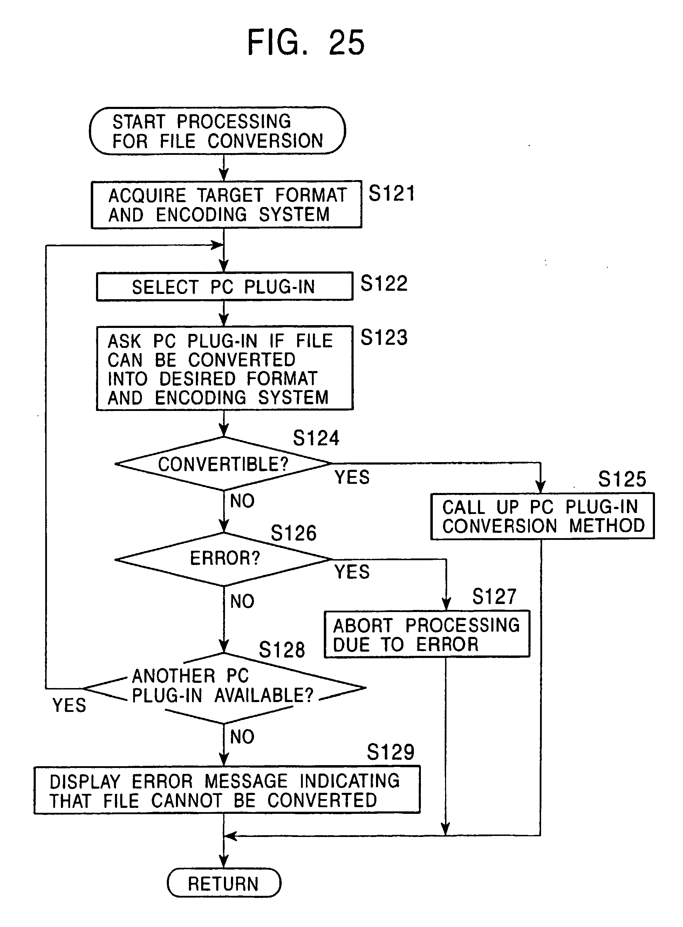

Referring now to the flowchart of Fig. 25, the processing for converting a file that is a part of the processing for optimization implemented in step S96 of Fig. 24 will be described in detail.

In step S121, the transferrer 103 acquires the format and the encoding system into which a file is to be converted. In step S122, the transferrer 103 selects the PC plug-in 109. In step S123, the transferrer 103 inquires of the selected PC plug-in 109 whether the file can be converted into a file of the desired format and encoding system. In step S124, based on the response from the PC plug-in 109, the transferrer 103 determines whether the file can be converted, and if the determination result is affirmative, then the transferrer 103 proceeds to step S125 wherein it calls up a conversion method to convert the file. This completes the processing.

In step S124, if it is determined that the file cannot be converted, then the transferrer 103 proceeds to step S126 to determine whether an error has occurred. If it is determined in step S126 that an error has occurred, then the transferrer 103 proceeds to step S127 to abort the processing because of the error. This completes the processing.

If it is determined in step S126 that no error has occurred, then the transferrer 103 further determines whether another PC plug-in 109 is available. If the determination result is affirmative, then the transferrer 103 returns to step S122 to repeat the processing from the selection of the PC plug-in 109.

If it is determined in step S128 that there is no other PC plug-in 109 available, then the transferrer 103 proceeds to step S129 to cause the GUI 101 to display an error message indicating that the file cannot be converted. This completes the processing.

Thus, the transferrer 103 is capable of selecting a PC plug-in 109 suited for the format and encoding system into which the file is to be converted, and of converting the file.

The descriptions have been given on the assumption that the contents are musical sound data. Alternatively, however, the contents may be other type of data, such as animated pictures, still pictures, and numeric values, or programs or the like.

It has been described that the personal computer 1 transfers contents to the portable device 5; however, the destinations to which contents are transferred are not limited to portable devices. Contents may alternatively be transferred to portable telephones, portable video cassette recorders with imaging features, portable personal computers, or personal digital assistants (PDAs), etc.

Furthermore, it has been described that the personal computer 1 transfers contents to the portable device 5; however, the destinations to which contents are transferred are not limited to portable devices. Contents may alternatively be transferred to recording media, such as magnetic disks, optical disks, magneto-optical disks, or semiconductor memories.

Furthermore, when a content is transferred to the portable device 5, the personal computer 1 may generate a content of a lower bit rate (i.e., a content of a smaller size) on the basis of an available capacity of the portable device 5, and transfer the generated content.

It is possible to carry out a series of the processing steps described above by hardware and also by software. To carry out the series of processing steps by software, a program constituting the software is installed from a program storing medium into a computer in which a program constituting the software has been installed in dedicated hardware, or the program constituting the software is installed from a program storing medium into, for example, a general-purpose personal computer or the like that is capable of implementing various functions by installing various programs.

As shown in Fig. 2, a program storing medium for storing a program that is installed to a computer and can be executed by the computer is formed of the magnetic disk 41 (including a floppy disk), the optical disk 42 (including a compact disc-read only memory (CD-ROM) and a digital versatile disk (DVD)), the magneto-optical disk 43 (including a mini-disc (MD)), a package medium constituted by the semiconductor memory 44 or the like, or the ROM 12 or the HDD 21 in which a program is temporarily or permanently stored. A program is stored in the program storing medium by using a wire or wireless communication medium, such as a local area network, the Internet, or digital satellite broadcast via an interface, such as a router or a modem, as necessary.

In the specification, the steps for describing the programs stored in the program storing medium include the steps of processing carried out in time series in the described sequence and also the steps of processing carried out in parallel or individually rather than in time series.

Furthermore, in the specification, the system refers to the entire apparatus constructed by a plurality of devices.

The following are the prior applications related to the application concerned that have been filed by the assignee:
(1) Japanese Patent Application No. 2000-326122 (Corresponding US application is now pending) ... Relating to contents data transfer.
(2) Japanese Patent Application No. 2000-327525 (Corresponding US application is now pending) ... Relating to OpenMG.
(3) US Patent No. 5,765,126 ... Relating to ATRAC3.

## Claims

1. A musical sound data processing apparatus comprising:
storing means (108-1, 108-2) for storing a plurality of contents;
a database (107) having a first file ID identifying a first file for storing a content in a first format and a second file ID identifying a second file for storing said content in a second format and a third file ID identifying a third file for storing said content in said first format at a different bit rate from said first file, wherein said first file ID and second file ID and third file ID are associated with one song ID identifying said content;
song list displaying means (20) for displaying a song list in which said content is displayed as a single song;
song ID specifying means (18, 19) for specifying one of a plurality of song IDs when one song is selected from said song list;
selecting means for selecting one of said first file, said second file and said third file based on the first file ID, the second file ID and the third file ID acquired from said database when said specified song ID is associated with said first file ID, said second file ID and said third file ID, according to compatibility of a destination device; and
manipulating means for manipulating either said first file, said second file or said third file as selected by said selecting means.

2. The musical sound data processing apparatus according to Claim 1, wherein said first file ID identifies said first file for storing said content in a format at a first bit rate and said third file ID identifies said third file for storing said content in said format at a second bit rate.

3. The musical sound data processing apparatus according to claim 2, wherein said selecting means selects a higher bit rate file of said first file and said third file.

4. A musical sound data processing method comprising the steps of:
storing a plurality of contents;
associating with one song ID identifying a content a first file ID identifying a first file for storing said content in a first format, a second file ID identifying a second file for storing said content in a second format, and a third file ID identifying a third file for storing said content in said first format at a different bit rate from said first file, wherein said first file ID and second file ID and third file ID are associated with one song ID identifying said content;
displaying a song list in which said content is displayed as a single song;
specifying one of a plurality of song IDs when one song is selected from said song list;
selecting one of said first file, said second file and said third file based on the first file ID, the second file ID and the third file ID when said specified song ID is associated with said first file ID, said second file ID and said third file ID, according to compatibility of a destination device; and
manipulating either said first file, said second file or said third file as selected.

5. The musical sound data processing method according to claim 4, wherein said first file ID identifies said first file for storing said content in a format at a first bit rate and said third file ID identifies said third file for storing said content in said format at a second bit rate.

6. The musical sound data processing method according to claim 5, wherein said step of selecting selects a higher bit rate file of said first file and said third file.

7. A program storing medium in which a computer-readable program has been stored, said program being operable to control a musical sound data processing method comprising the steps of:
storing a plurality of contents;
associating with one song ID identifying said content a first file ID identifying a first file for storing a content in a first format, a second file ID identifying a second file for storing said content in a second format and a third file ID identifying a third file for storing said content in said first format at a different bit rate from said first file, wherein said first file ID and second file ID and third file ID are associated with one song ID identifying said content;
displaying a song list in which said content is displayed as a single song when stored in said first file format, said second file format and said third file format;
specifying one of a plurality of song IDs when one song is selected from said song list;
selecting one of either said first file, said second file and said third file based on the first file ID, the second file ID and the third file ID when said specified song ID is associated with said first file ID, said second file ID and said third file ID, according to compatibility of a destination device; and
manipulating either said first file, said second file or said third file as selected.

8. The program storing medium according to Claim 7, wherein said first file ID identifies said first file for storing said content in a format at a first bit rate and said third file ID identifies said third file for storing said content in said format at a second bit rate.

9. The program storing medium according to claim 8, wherein said step of selecting selects a higher bit rate file of said first file and said third file.

## Patentansprüche

1. Musiktondatenverarbeitungsgerät, aufweisend:
eine Speichereinrichtung (108-1, 108-2) zum Speichern mehrerer Inhalte,
eine Datenbank (107), die einer eine erste Datei zum Speichern eines Inhalts in einem ersten Format identifizierenden ersten Datei-ID und einer eine zweite Datei zum Speichern des Inhalts in einem zweiten Format identifizierenden zweiten Datei-ID und einer eine dritte Datei zum Speichern des Inhalts in dem ersten Format bei einer von der ersten Datei abweichenden Bitrate identifizierenden dritten Datei-ID aufweist, wobei die erste Datei-ID und zweite Datei-ID und dritte Datei-ID mit einem den Inhalt identifizierenden Lied-ID assoziiert sind,
eine Liedlistenanzeigeeinrichtung (20) zum Anzeigen einer Liedliste, in welcher der Inhalt als ein einzelnes Lied angezeigt wird,
eine Lied-ID-Spezifizierungseinrichtung (18, 19) zum Spezifizieren von mehreren Lied-IDs einen, wenn ein Lied aus der Liedliste ausgewählt wird,
eine Auswableimichtung zum Auswählen von der ersten Datei, der zweiten Datei und der dritten Datei eine auf Basis der ersten Datei-ID, der zweiten Datei-ID und der dritten Datei-ID, erfasst von der Datenbank, wenn die spezifizierte Lied-ID mit der ersten Datei-ID, der zweiten Datei-ID und der dritten Datei-ID assoziiert ist, entsprechend einer Kompatibilität einer Bestimmungseinrichtung, und
eine Manipulierungseinrichtung zum Manipulieren der ersten Datei, der zweiten Datei oder der dritten Datei wie von der Auswahleinrichtung jeweils ausgewählt.

2. Musiktondstenvcrarbcitungsgerät nach Anspruch 1, wobei die erste Datei-ID die erste Datei zum Speichern des Inhalts in einem Format bei einer ersten Bitrate identifiziert und die dritte Datei-ID die dritte Datei zum Speichern des Inhalts in dem Format bei einer zweiten Bitrate identifiziert.

3. Musiktondatenverarbeitungsgerät nach Anspruch 2, wobei die Auswahleinrichtung eine Datei höherer Bitrate der ersten Datei und der dritten Datei auswählt.

4. Musiktondatenverarbeitungsverfahren, aufweisend die Schritte:
Speichern mehrerer Inhalte,
Assoziieren mit einer einen ersten Inhalt identifizierenden Lied-ID eine eine erste Datei identifizierende erste Datei-ID zum Speichern des Inhalts in einem ersten Format, eine eine zweite Datei identifizierende zweite Datei-ID zum Speichern des Inhalts in einem zweiten Format und eine eine dritte Datei identifizierende dritte Datei-ID zum Speichern des Inhalts im ersten Format bei einer von der ersten Datei abweichenden Bitrate, wobei die erste Datei-ID und zweite Datei-ID und dritte Datei-ID mit einem den Inhalt identifizierenden Lied-ID assoziiert sind,
Anzeigen einer Liedliste, in welcher der Inhalt als ein einzelnes Lied angezeigt wird,
Spezifizieren einer von mehreren Lied-IDs, wenn ein einzelnes Lied aus der Liedliste ausgewählt wird,
Auswählen von der ersten Datei, der zweiten Datei und der dritten Datei eine auf Basis der ersten Datei-ID, der zweiten Datei-ID und der dritten Datei-ID, wenn die spezifizierte Lied-ID mit der ersten Datei-ID, der zweiten Datei-ID und der dritten Datei-ID assoziiert ist, entsprechend einer Kompatibilität einer Bestimmungseinrichtung, und
Manipulieren der ersten Datei, der zweiten Datei oder der dritten Datei wie jeweils ausgewählt.

5. Musiktondatenverarbeitungsverfahren nach Anspruch 4, wobei die erste Datei-ID die erste Datei zum Speichern des Inhalts in einem Format bei einer ersten Bitrate identifiziert und die dritte Datei-ID die dritte Datei zum Speichern des Inhalts in dem Format bei einer zweiten Bitrate identifiziert.

6. Musiktondatenverarbeitmgsverfahren nach Anspruch 5, wobei der Schritt zum Auswählen eine Datei höherer Bitrate der ersten Datei und der dritten Datei auswählt.

7. Programmspeichermedium, in welchem ein computerlesbares Programm gespeichert worden ist, wobei das Programm betriebsfähig ist zum Steuern eines Musiktondatenverarbeitungsverfahrens, aufweisend die Schritte:
Speichern mehrerer Inhalte,
Assoziieren mit einer den Inhalt identifizierenden Lied-ID eine eine erste Datei zum Speichern eines Inhalts in einem ersten Format identifizierende erste Datei-ID, eine eine zweite Datei zum Speichern der Inhalts in einem zweiten Format identifizierende zweite Datei-ID und eine eine dritte Datei zum Speichern des Inhalts im ersten Format bei einer von der ersten Datei abweichenden Bitrate identifizierenden dritten Datei-ID, wobei der erste Datei-ID und zweite Datei-ID und dritte Datei-ID mit einem den Inhalt identifizierenden Lied-ID assoziiert sind,
Anzeigen einer Liedliste, in welcher der Inhalt, wenn im ersten Dateiformat, zweiten Dateiformat und dritten Dateiformat gespeichert, als ein einzelnes Lied angezeigt wird,,
Spezifizieren einer von mehreren Lied-IDs, wenn ein einzelnes Lied aus der Liedliste ausgewählt wird,
Auswählen von der ersten Datei, der zweiten Datei und der dritten Datei eine auf Basis der ersten Datei-ID, der zweiten Datei-ID und der dritten Datei-ID, wenn die spezifizierte Lied-ID mit der ersten Datei-ID, der zweiten Datei-ID und der dritten Datei-ID assoziiert ist, entsprechend einer Kompatibilität einer Bestimmungseinrichtung, und
Manipulieren der ersten Datei, der zweiten Datei oder der dritten Datei wie jeweils ausgewählt.

8. Programmspeichermedium nach Anspruch 7, wobei die erste Datei-ID die erste Datei zum Speichern des Inhalts in einem Format bei einer ersten Bitrate identifiziert und die dritte Datei-ID die dritte Datei zum Speichern des Inhalts in einem Format bei einer zweiten Bitrate identifiziert.

9. Programmspeichermedium nach Anspruch 8, wobei der Schritt zum Auswählen eine Datei höherer Bitrate der ersten Datei und der dritten Datei auswählt.

## Revendications

1. Appareil de traitement de données sonores musicales comportant :
un moyen de mémorisation (108-1, 108-2) pour mémoriser une pluralité de contenus;
une base de données (107) possédant une première ID de fichier identifiant un premier fichier pour mémoriser un contenu dans un premier format et une seconde ID de fichier identifiant un second fichier pour mémoriser ledit contenu dans un second format et une troisième ID de fichier identifiant un troisième fichier pour mémoriser ledit contenu dans ledit premier format à un débit binaire différent dudit premier fichier, dans lequel lesdites première ID de fichier et seconde ID de fichier ID et troisième ID de fichier sont associés à une ID de chanson identifiant ledit contenu ;
un moyen d'affichage de liste de chansons (20) pour afficher une liste de chansons dans lequel ledit contenu est affiché sous la forme d'une seule chanson ;
un moyen de spécification d'ID de chanson (18, 19) pour spécifier l'une une pluralité d'ID de chanson lorsqu'une chanson est sélectionnée à partir de ladite liste de chansons ;
un moyen de sélection pour sélectionner l'un dudit premier fichier, dudit second fichier et dudit troisième fichier en fonction de la première ID de fichier, de la seconde ID de fichier et de la troisième ID de fichier à partir de la base de données lorsque ladite ID de chanson spécifiée est associée à ladite première ID de fichier, ladite seconde ID de fichier et ladite troisième ID de fichier, conformément à la compatibilité d'un dispositif de destination ; et
un moyen de manipulation pour manipuler soit ledit premier fichier soit ledit second fichier soit ledit troisième fichier tel que sélectionné par ledit moyen de sélection.

2. Appareil de traitement de données sonores musicales selon la revendication 1, dans lequel ladite première ID de fichier identifie ledit premier fichier pour mémoriser ledit contenu dans un format à un premier débit binaire et ladite troisième ID de fichier identifie ledit troisième fichier pour mémoriser ledit contenu dans ledit format à un second débit binaire.

3. Appareil de traitement de données sonores musicales selon la revendication 2, dans lequel ledit moyen de sélection sélectionne un fichier à débit binaire très élevé entre ledit premier fichier et ledit troisième fichier.

4. Procédé de traitement de données sonores musicales comportant les étapes consistant à :
mémoriser une pluralité de contenus ;
associer à une ID de chanson identifiant un contenu une première ID de fichier identifiant un premier fichier pour mémoriser ledit contenu dans un premier format, une seconde ID de fichier identifiant un second fichier pour mémoriser ledit contenu dans un second format, et une troisième ID de fichier identifiant un troisième fichier pour mémoriser ledit contenu dans ledit premier format à un débit binaire différent dudit premier fichier, dans lequel lesdites première ID de fichier et seconde ID de fichier et troisième ID de fichier sont associées à une ID de chanson identifiant ledit contenu ;
afficher une liste de chansons dans lequel ledit contenu est affiché sous la forme d'une seule chanson ;
spécifier l'une d'une pluralité d'ID de chanson lorsqu'une chanson est sélectionnée à partir de ladite liste de chansons ;
sélectionner l'un dudit premier fichier, dudit second fichier et dudit troisième fichier en fonction de la première ID de fichier, de la seconde ID de fichier et de la troisième ID de fichier lorsque ladite ID de chanson spécifiée est associée à ladite première ID de fichier, ladite seconde ID de fichier de ladite troisième ID de fichier, conformément à une compatibilité d'un dispositif de destination ; et
manipuler soit ledit premier fichier, soit ledit second fichier soit ledit troisième fichier tel que sélectionné.

5. Procédé de traitement de données sonores musicales selon la revendication 4, dans lequel ladite première ID de fichier identifie ledit premier fichier pour mémoriser ledit contenu dans un format à un premier débit binaire et ladite troisième ID de fichier identifie ledit troisième fichier pour mémoriser ledit contenu dans ledit format à un second débit binaire.

6. Procédé de traitement de données sonores musicales selon la revendication 5, dans lequel ladite étape de sélection sélectionne un fichier à débit binaire très élevé entre ledit premier fichier et ledit troisième fichier.

7. Support mémorisant un programme dans lequel un programme pouvant être lu par un ordinateur a été mémorisé, ledit programme permettant de contrôler un procédé de traitement de données sonores musicales comportant les étapes consistant à :
mémoriser une pluralité de contenus ;
associer à une ID de chanson identifiant ledit contenu une première ID de fichier identifiant un premier fichier pour mémoriser un contenu dans un premier format, une seconde ID de fichier identifiant un second fichier pour mémoriser ledit contenu dans un second format et une
troisième ID de fichier identifiant un troisième fichier pour mémoriser ledit contenu dans ledit premier format à un débit binaire différent dudit premier fichier, dans lequel lesdites première ID de fichier et seconde ID de fichier et troisième ID de fichier sont associées à une ID de chanson identifiant ledit contenu ;
afficher une liste de chansons dans lequel ledit contenu est affiché sous la forme d'une seule chanson lorsqu'il est mémorisé dans ledit premier format de fichier, ledit second format de fichier et ledit troisième format de fichier ;
spécifier l'une d'une pluralité d'ID de chanson lorsqu'une chanson est sélectionnée à partir de ladite liste de chansons ;
sélectionner l'un soit dudit premier fichier, soit dudit second fichier, soit dudit troisième fichier en fonction de la première ID de fichier, de la seconde ID de fichier et de la troisième ID de fichier lorsque ladite ID de chanson est associée à ladite première ID de fichier, ladite seconde ID de fichier et ladite troisième ID de fichier, conformément à une compatibilité d'un dispositif de destination ; et
manipuler soit ledit premier fichier, soit ledit second fichier soit ledit troisième fichier tel que sélectionné.

8. Support mémorisant un programme selon la revendication 7, dans lequel ladite première ID de fichier identifie ledit premier fichier pour mémoriser ledit contenu dans un format à un premier débit binaire et ladite troisième ID de fichier identifie ledit troisième fichier pour mémoriser ledit contenu dans ledit format à un second débit binaire.

9. Support mémorisant un programme selon la revendication 8, dans lequel ladite étape de sélection sélectionne un fichier à débit binaire très élevé entre ledit premier fichier et ledit troisième fichier.
